# EUROPEAN PATENT SPECIFICATION

(11) **EP 1 497 228 B1**
(45) Date of publication and mention of the grant of the patent: **10.10.2007**
(21) Application number: 02718509.9
(22) Date of filing: 28.03.2002
(51) Int. Cl.: C01G 28/02

(54) **SOLID STATE SYNTHESIS OF LITHIUM META ARSENITE**
FESTKÖRPER-SYNTHESE VON LITHIUM-META-ARSENIT
SYNTHESE A L'ETAT SOLIDE DE META-ARSENITE DE LITHIUM

(43) Date of publication of application: 19.01.2005
(73) Proprietor: COUNCIL OF SCIENTIFIC AND INDUSTRIAL RESEARCH, New Delhi 110 001 (IN)
(72) Inventor: Angaiah, Subramaniam, Dept. of Ind. Chemistry, Karaikudi 630 003 (Tamil Nadu) (IN); Thiagarajan, Vasudevan, Karaikudi 630 003 (Tamil Nadu) (IN); Ramaiyer, Gangadharan, Karaikudi 630 003 (Tamil Nadu) (IN); Meenakshisundaram, Raghavan, Karaikudi 630 006 (Tamil Nadu) (IN)
(74) Representative: Kihn, Pierre Emile Joseph
(86) International application number: PCT/IN2002/000086
(87) International publication number: WO 2003/082745

(56) References cited:
- US-A- 1 700 756
- US-A- 2 319 777
- US-A- 2 396 465
- US-A- 3 511 598

## Description

### Field of the invention

The present invention provides a novel process for the preparation of lithium meta arsenate (LiAsO₂) useful as an intermediate for the preparation of lithium hexafluro arsenate (LiAsF₆) which is a secondary lithium ion battery electrolyte for nonaqueous solid state and polymer electrolyte.

### Background of the invention

Lithium meta arsenate (LiAsO₂) is not well documented in literature although the corresponding equivalent sodium compound known as sodium meta arsenate (NaASO₂) is well documented in literature. This compound easily decomposes in acid media to arseneous trioxide (As₂O₃). Since other methods are not available to prepare this compound, as of today there is nothing to write about the disadvantages. US 2,319,777 discloses a process for the manufacture of an alkali metal or alkaline earth metal meta arsenate. The process consists of heating a dry, finely divided mixture of As₂O₃ and either an alkaline earth metal hydroxide, carbonate or oxide, or an alkali metal hydroxide or carbonate. The mixture is initially heated to start the reaction, then the temperature is maintained at substantially 100° C without the addition of further heat.

### Objects of the invention

The main object of this invention is to provide a novel hitherto unattempted method for the synthesis of lithium meta arsenate (LiAsO₂) salt.

Another object of this invention is to provide a simple thermal method for the synthesis of lithium meta arsenate (LiAsO₂).

Yet another object of this invention is to get a pure product from solid state reactions without any side or partial reaction.

Still yet another object of this invention is to synthesis lithium meta arsenate (LiAsO₂) by thermal method.

Yet another object of this invention is to provide a clean reaction by mixing equimolar proportions of lithium salts and arsenous trioxide under closed controlled conditions.

### Summary of the invention

Accordingly, the present invention provides a novel method for the preparation of lithium meta arsenate (LiAsO₂) comprising mixing a lithium source selected from the group consisting of lithium carbonate (dry and AR), lithium oxide (dry and AR quality), lithium nitrate (dry and AR), lithium hydroxide (dry and AR) and any mixture thereof with arsenious trioxide (dry and AR), grinding the mixture and heating the ground mixture to obtain lithium meta arsenate (LiAsO₂) and cooling the product so obtained.

In one embodiment of the invention, the reactions are conducted in solid state with the lithium source and arsenious trioxide both being taken in the form of solids.

In another embodiment of the invention, the lithium source is selected from the group consisting of lithium oxide (dry and AR quality), lithium nitrate (dry and AR) and lithium hydroxide (dry and AR) and the heating of the ground mixture of said lithium source with arsenious trioxide is done at a temperature of 400°C for 4 hours.

In another embodiment of the invention, the lithium source comprises lithium carbonate (dry and AR) and the heating of the ground mixture of said lithium source with arsenious trioxide is done at a temperature of 600°C for 10 hours.

In another embodiment of the invention, the ground mixture of solid lithium source and solid arsenious trioxide are taken in a silica or porcelain crucible and introduced into a preheated furnace kept at a preheat of 100°C.

In an embodiment of the invention LiOH or Li₂O or Li₂CO₃ or LiNO₃ is allowed to react with arseneous trioxide (As₂O₃) by a solid state thermal procedure.

In still another embodiment of the invention the lithium source and the arsenious trioxide are taken in the molar ratio of 1:1 such that lithium: arsenic are in 1:1 proportion. In yet another embodiment of the invention the process is carried out in a single step.

In yet another embodiment of the invention no side or partial reactions occur.

### Brief description of the accompanying drawing

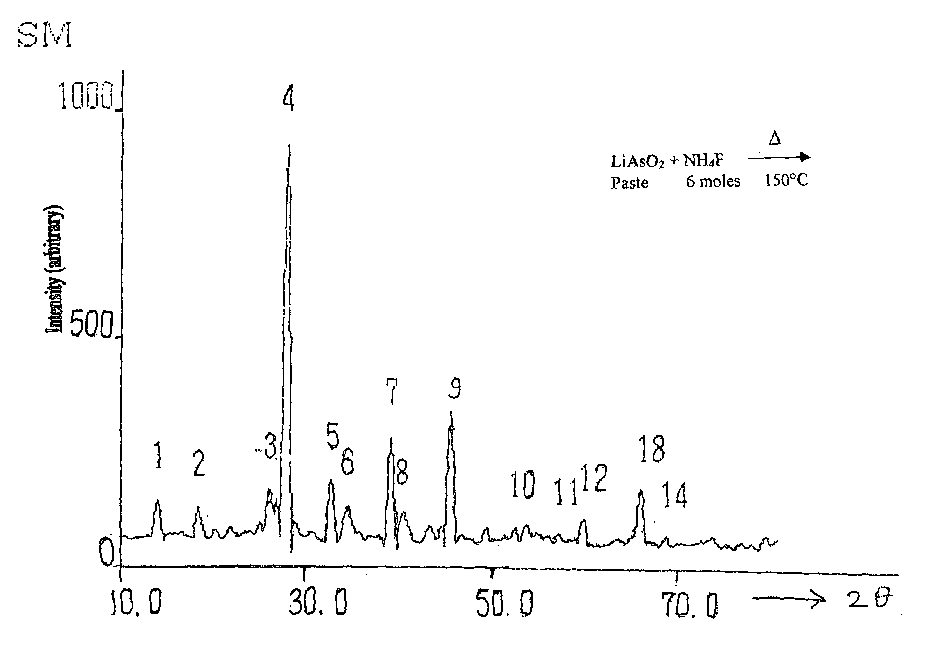

Figure 1 is the X-ray analysis of the product sample obtained by the process of the invention confirming the purity of the product.

### Detailed description of the invention

Lithium meta arsenate (LiAsO₂) is prepared in the present invention by the following procedure which can be considered as pure solid state reaction between two solid state material namely lithium salts of lithium hydroxide or lithium oxide or lithium carbonate or lithium nitrate and arsenous trioxide on specific conditions of heating. Hence, lithium meta arsenate (LiAsO₂) is prepared by reacting LiOH or LiNO₃ or Li₂CO₃ or Li₂O with As₂O₃ under controlled heating conditions. A solid state reaction occurs between the salts of lithium mentioned above with arseneous trioixide at specific temperatures and the product lithium meta arsenate (LiAsO₂) is formed. Arsenous trioxide is mixed with equimolar proportions of LiOH or LiNO₃ or Li₂CO₃ or Li₂O salt and the mixture was ground well and the ground mixture was transferred into a silica/porcelain crucible. The crucible containing the lithium salt and arsenous trioxide mixture was slowly heated to 100°C and then heated to 400°C for 10 hours in an electric furnace continuously maintaining the temperature. However, in the case of lithium carbonate, arsenous troxide mixture the heating was raised to 600°C keeping the same time as 10 hours for maintaining the temperature.

The reaction occurring during the solid state process is given below

2 LiX + As₂O₃ --- → 2 LiAsO₂ + 2X where X is OH⁻, O²⁻, NO₃⁻; CO₃²⁻

A novel method for the preparation of lithium meta arsenate (LiAsO₂) was developed wherein lithium carbonate (dry and AR) or lithium oxide (dry & AR quality) or lithium nitrate (dry and AR) and lithium hydroxide (dry and AR) are mixed with equimolar quantity or arsenous trioxide (dry and AR). The mixture is ground well and then transferred to a silica or porcelain crucible. The crucible is inserted into a preheated electric furnace kept at a temperature of 100°C and the heating was slowly raised to 400°C and the temperature maintained for 4 hours for the mixture containing any of the following lithium salts - LiOH or LiNO₃ or Li₂O salt. For the mixture containing Li₂CO₃ however the temperature was raised to 600°C and the heating continued for 10 hours. The product was then removed from the furnace after cooling and analysed the sample by X-ray to confirm the purity and identity of the product.

The reactions that occur are:

a. 2LiOH + As₂O₃ → 2 LiAsO₂ + H₂O

b. 2 LiNO₃ + As₂O₃ → 2LiAsO₂ + 2NO₂

c. Li₂CO₃ + As₂O₃ → 2 LiAsO₂ + CO₂

d. Li₂O + As₂O₃ → 2LiAsO₂

LiOH or Li₂O or Li₂CO₃ or LiNO₃ is allowed to react with arseneous trioxide (As₂O₃) by a solid state thermal procedure. The lithium salt and the arsenic salt are taken in the molar ratio of 1:1 such that lithium : arsenic is in 1:1 proportion. A feature of this invention is that the process is carried out in a single step. No side or partial reactions occur.

The following examples are given by way of illustration and therefore should not be construed to limit the scope of the present invention.

### Example 1

proportion. The mixture was ground well and then the ground mixture was transferred into a silica/porcelain crucible. The mixture was introduced into an electric furnace kept at 100°C. After keeping the mixture for an hour at 100°C the temperature of the furnace was elevated to 600°C. The heating was done for 10 hours. The heating was discontinued and the furnace was cooled to room temperature. The product obtained was analyzed.

| **Components** | **Composition** |
|---|---|
| Li₂CO₃ | 0.74 g |
| As₂O₃ | 1.98 g |
| Initial Temperature | 100°C |
| Time | 1 hours |
| Final Temperature . | 600°C |
| Time | 10 hours |
| Colour of the product | White |
| Efficiency of the process > 92% | |

### Example 2

Pure and dry LiOH is mixed with pure and dry arsenous oxide in equimolar proportions. The mixture was ground well and then the ground mixture was transferred into a silica/porcelain crucible. The mixture was introduced into an electric furnace kept at 100°C. After keeping the mixture for an hour at 100°C the temperature of the furnace was elevated to 400°C. The heating was done for 10 hours. The heating was discontinued and the furnace was cooled to room temperature. The product obtained was analyzed.

| **Components** | **Composition** |
|---|---|
| LiOH | 0.84g |
| As₂O₃ | 1.98g |
| Initial Temperature | 100°C |
| Time | 1 hour |
| Final Temperature | 400°C |
| Time | 10 hours |
| Colour of the product | White |
| Efficiency of the process > 95% | |

### Example 3

Pure and dry LiNO₃ is mixed with pure and dry arsenous oxide in equimolar proportions. The mixture was ground well and then the ground mixture was transferred into a silica/porcelain crucible. The mixture was introduced into an electric furnace kept at 100°C. After keeping the mixture for an hour at 100°C the temperature of the furnace was elevated to 400°C. The heating was done for 10 hours. The heating discontinued and the furnace was cooled to room temperature. The product obtained was analyzed.

| **Components** | **Composition** |
|---|---|
| LiNO₃ | 2.46g |
| As₂O₃ | 7.5g |
| Initial Temperature | 100°C |
| Time | 1 hour |
| Final Temperature | 400°C |
| Time | 10 hours |
| Colour of the product | White |
| Efficiency of the process > 92% | |

### Example 4

Pure and dry Li₂O is mixed with pure and dry arsenous oxide in equimolar proportions. The mixture was ground well and then the ground mixture was transferred into a silica/porcelain crucible. The mixture was introduced into an electric furnace kept at 100°C. After keeping the mixture for an hour at 100°C the temperature of the furnace was elevated to 400°C. The heating was done for 10 hours. The heating was discontinued and the furnace was cooled to room temperature. The product obtained was analyzed.

| **Components** | **Composition** |
|---|---|
| Li₂O | 0.6 g |
| As₂O₃ | 1.98 g |
| Initial Temperature | 100°C |
| Time | 1 hour |
| Final Temperature | 400°C |
| Time | 10 hours |
| Colour of the product | White |
| Efficiency of the process > 95% | |

### Conclusion

1. Lithium salts like Li₂O, Li₂CO₃, LiOH, LiNO₃ or the mixtures are used to react with arseneous trioxide in the molar ratio 1:1.
2. Lithium salts Li₂O, Li₂CO₃, LiOH, LiNO₃ react with As₂O₃ to form LiAsO₂.
3. A solid state reaction occurs when arseneous trioxide reacts with Li₂O, Li₂CO₃, LiOH, LiNO₃.
4. It is a single step procedure.

## Claims

1. A method for the preparation of lithium meta arsenite (LiAsO₂) comprising mixing a lithium source with arsenious trioxide, grinding the mixture and heating the ground mixture to obtain lithium meta arsenite (LiAsO₂) and cooling the product so obtained, wherein the lithium source and the arsenious trioxide have the molar ratio of 1:1 such that lithium: arsenic are in 1:1 proportions; wherein the lithium source is selected from the group consisting of lithium oxide, lithium nitrate, lithium hydroxide and any mixture thereof and the heating of the ground mixture of said lithium source with arsenious trioxide is done at a temperature of 400°C for 4 to 10 hours.

2. A method as claimed in claim 1 wherein the mixing of the lithium source and the arsenious trioxide is conducted in solid state with the lithium source and arsenious trioxide both in the form of solids.

3. A method as claimed in claim 2 wherein the ground mixture of solid lithium source and solid arsenious trioxide are in a silica or porcelain crucible and introduced into a preheated furnace.

4. A method as claimed in claim 3, wherein the furnace is preheated to 100°C.

5. A method as claimed in claim 1 wherein the LiOH or Li₂O or LiNO₃ is reacted with arsenious trioxide (As₂O₃) by a solid state thermal procedures.

6. A method as claimed in claim 1 wherein the preparation of lithium meta arsenite is carried out in a single step,

7. A method as claimed in claim 1 wherein no side or partial reactions occur.

8. A method as claimed in claim 1 where the efficiency is greater than 92%.

9. A method for the preparation of lithium meta arsenite (LiAsO₂) comprising mixing lithium carbonate with arsenious trioxide, grinding the mixture and heating the ground mixture to obtain lithium meta arsenite (LiAsO₂) and cooling the product so obtained, wherein the lithium carbonate and the arsenious trioxide have the molar ratio of 1:1 such that lithium : arsenic are in 1:1 proportions; wherein the heating of the ground mixture of said lithium carbonate with arsenious trioxide is done at a temperature of 600°C for 10 hours.

## Patentansprüche

1. Verfahren zur Herstellung von Lithiummetaarsenit (LiAsO₂), umfassend das Mischen einer Lithiumquelle mit Arsentrioxid, das Mahlen des Gemischs und das Erhitzen des gemahlenen Gemischs zur Gewinnung von Lithiummetaarsenit (LiAsO₂) und das Kühlen des so gewonnenen Produkts, wobei die Lithiumquelle und das Arsentrioxid das Molverhältnis 1:1 haben, so dass Lithium Arsen in 1:1-Anteilen vorliegen; wobei die Lithiumquelle aus der Gruppe bestehend aus Lithiumoxid, Lithiumnitrat, Lithiumhydroxid und irgendeinem Gemisch davon ausgewählt wird und das Erhitzen des gemahlenen Gemischs aus der Lithiumquelle und Arsentrioxid für 4 bis 10 Stunden bei einer Temperatur von 400°C erfolgt

2. Verfahren nach Anspruch 1, wobei das Mischen der Lithiumquelle und des Arsentrioxids im Festkörperzustand mit der Lithiumquelle und Arsentrioxid als Feststoffen durchgeführt wird

3. Verfahren nach Anspruch 2, wobei das gemahlene Gemisch aus fester Lithiumquelle und festem Arsentrioxid sich in einem Quarzglas- oder Porzellantiegel befindet und in einen vorgeheizten Ofen eingeführt wird

4. Verfahren nach Anspruch 3, wobei der Ofen auf 100°C vorgeheizt wird.

5. Verfahren nach Anspruch 1, wobei das LiOH oder Li₂O oder LiNO₃ durch ein thermisches Festkörperverfahren mit Arsentrioxid (As₂O₃) zur Reaktion gebracht wird

6. Verfahren nach Anspruch 1, wobei die Herstellung von Lithiummetaarsenit in einem einzigen Schritt durchgeführt wird.

7. Verfahren nach Anspruch 1, wobei keine Neben- oder Teilreaktionen auftreten

8. Verfahren nach Anspruch 1, wobei der Wirkungsgrad größer als 92% ist

9. Verfahren zur Herstellung von Lithiummetaarsenit (LiAsO₂), umfassend das Mischen von Lithiumcarbonat mit Arsentrioxid, das Mahlen des Gemischs und das Erhitzen des gemahlenen Gemischs zur Gewinnung von Lithiummetaarsenit (LiAsO₂) und das Kühlen des so gewonnenen Produkts, wobei das Lithiumcarbonat und das Arsentrioxid das Molverhältnis 1:1 haben, so dass Lithium Arsen in 1:1-Anteilen vorliegen; wobei das Erhitzen des gemahlenen Gemischs aus Lithiumcarbonat und Arsentrioxid für 10 Stunden bei einer Temperatur von 600°C erfolgt

## Revendications

1. Procédé pour la préparation de méta arsénite de lithium (LiAsO₂) comprenant le mélange d'une source de lithium avec du trioxyde arsénieux, le broyage du mélange et le chauffage du mélange moulu pour obtenir le méta arsénite de lithium (LiAsO₂) et le refroidissement du produit ainsi obtenu, dans lequel la source de lithium et le trioxyde arsénieux ont le rapport molaire de 1:1 de telle façon que le lithiumarsenic soient dans la proportion de 1 1 ; dans lequel la source de lithium est choisie parmi le groupe composé de l'oxyde de lithium, du nitrate de lithium, de l'hydroxyde de lithium et de n'importe quel mélange de ceux-ci et le chauffage du mélange moulu de ladite source de lithium avec le trioxyde arsénieux est fait à une température de 400°C pendant de 4 à 10 heures

2. Procédé selon la revendication 1 dans lequel le mélange de la source de lithium et du trioxyde arsénieux est conduit à l'état solide avec la source de lithium et le trioxyde arsénieux tous deux sous la forme de solides

3. Procédé selon la revendication 2 dans lequel le mélange moulu de source de lithium solide et de trioxyde arsénieux solide sont dans un creuset en silice ou en porcelaine et introduits dans un four préchauffé

4. Procédé selon la revendication 3, dans lequel le four est préchauffé à 100°C.

5. Procédé selon la revendication 1 dans lequel le LiOH ou le LiO₂ ou le LiNO₃ est mis à réagir avec le trioxyde arsénieux (As₂O₃) au moyen d'un procédé thermique à l'état solide

6. Procédé selon la revendication 1 dans lequel la préparation de méta arsénite de lithium est réalisée en une seule étape,

7. Procédé selon la revendication 1 dans lequel aucune réaction secondaire ou partielle ne se produit

8. Procédé selon la revendication 1 où l'efficacité est supérieure à 92%

9. Procédé pour la préparation du méta arsénite de lithium (LiAsO₂) comprenant un mélange de carbonate de lithium avec du trioxyde arsénieux, le broyage du mélange et le chauffage du mélange moulu pour obtenir le méta arsénite de lithium (LiAsO₂) et le refroidissement du produit ainsi obtenu, dans lequel le carbonate de lithium et le trioxyde arsénieux ont le rapport molaire de 1:1 de telle façon que le lithium:arsenic soient dans la proportion de 1:1 ; dans lequel le chauffage du mélange moulu dudit carbonate de lithium avec le trioxyde arsénieux est fait à une température de 600°C pendant 10 heures
